# EUROPEAN PATENT SPECIFICATION

(11) **EP 3 362 242 B1**
(45) Date of publication and mention of the grant of the patent: **29.04.2020**
(21) Application number: 16805231.4
(22) Date of filing: 13.10.2016
(51) Int. Cl.: B29C 41/04, B29C 41/46

(54) **A MOLD HEATING SYSTEM WHICH INCREASES PRODUCTION SPEED FOR ROTATIONAL MOLDING TECHNOLOGY**
FORMHEIZSYSTEM ZUR ERHÖHUNG DER PRODUKTIONSGESCHWINDIGKEIT BEIM ROTATIONSFORMEN
SYSTÈME DE CHAUFFAGE DE MOULE POUR AUGMENTATION DE LA VITESSE DE PRODUCTION POUR ROTOMOLDING

(30) Priority: 13.10.2015 TR 201512708
(43) Date of publication of application: 22.08.2018
(73) Proprietor: Floteks Plastik Sanayi Ve Ticaret Anonim Sirketi, Osmangazi/Bursa (TR)
(72) Inventor: BEYSEL, Veysel Celal, Osmangazi/Bursa (TR)
(74) Representative: Kaya, Erdem
(86) International application number: PCT/TR2016/050378
(87) International publication number: WO 2017/065715

(56) References cited:
- EP-A1- 2 842 711
- WO-A1-2005/120803
- WO-A2-2013/164765
- JP-A- S61 279 515
- JP-A- 2001 009 836
- JP-A- 2005 138 366
- US-A- 3 173 175
- US-A1- 2013 040 012

## Description

### TECHNICAL FIELD

The present invention relates to a mold heating system improved for use in shaping of materials in the mold by means of heat exchange.

### PRIOR ART

Plastic products like water depots, fuel depots, plastic canoes, traffic pins and similar are manufactured by means of rotational molding. Rotational molding is a method where heat is applied to the mold from outside and the mold is rotated in the horizontal and vertical axis and the material which is in powder form placed into the mold is molten and spread on the inner surface of the mold and the material cools down and hardened and takes the form of the mold. Rotating, heating and cooling are playing an important role in this method.

In the present art, there are various heating and rotating methods. In the present art, the rotation process is frequently provided by means of a mold carrier system which can rotate in two axes after being inserted into a hot air blowing furnace which can be brought to the required temperature for a special mold carrier system and which can be kept at that temperature. In another recently applied system, the mold can be heated by means of electrical heaters which are in direct contact with the mold without inserting the mold into the furnace. In such an electrical heating system, the mold can be mounted to the robot arm instead of the carrier system, and the mold can be rotated in the two axes. Such systems and methods are known for example from WO 2013/164765 A2, which discloses, that each mold can be associated with its own temperature control device and that direct heating can be provided by electrical heaters on or in the mould wall, by induction heating or infrared heating in or on the mould wall, by the presence of channels on or in the mould wall for the passage of a liquid or a vapour at the desired temperature. According to WO 2013/164765 A2, the temperature control device can be integrally with the mould or be provided by the robot arm onto which the mould is mounted.

In a present method, the heating process is provided by blowing hot air into the furnace wherein the mold is placed. In this method, natural gas is frequently used. The air, heated by means of natural gas, is transferred to the heating chamber wherein the molds rotate in the two axes, and air realizes the function of heating, and the additional air, entering by means of the burner, exits through a funnel. It is obvious that the transfer of the heat formed by means of burning natural gas is an inefficient energy transfer. The carbon footprint here is high. The efficiency moreover decreases as a result of the leaking heat since the air, applied to the furnace from outside for functioning of the burner, is discharged through the funnel. At the same time, the worst inefficiency source here is that, the whole furnace shall be heated and the mold carrier construction shall be heated during heating of the mold.

In another method, heating is provided by means of electrical resistances placed to the channels prepared on the mold during the mold construction stage. However, in this method, the mold expenses increase and thus the cost increases. Moreover, the present molds cannot become compliant to this system, or revised in accordance with this system, and new mold construction is required. In the Mexican patent with application number MX2014012038, a solution related to heating of the molds remotely by means of resistances is described.

In another method, the molds are heated by means of passing hot oil through the prepared channels. In the Mexican patent with number MX2014010226, it is disclosed that rotational molding is possible by heating the molds by means of oil. All of the cost disadvantages mentioned in the abovementioned description in the electrical resistances placed to the mold channels are also faced for the molds realized for heating by circulating hot oil. Heating systems and methods for rotational molding are also known from US 3173175 A.

As a result, because of all of the abovementioned problems, an improvement is required in the related technical field. The use of heaters with heat pipes in heating systems and heating methods for different kinds of molds for injection, resin transfer or compression molding is known from JP S61279515 A, JP 2005138366 A, EP 2842711 A1, US 2013/040012 A1, JP 2001009836 A and WO 2005/120803 A1. For example, above mentioned JP S61279515 A discloses a mold heating system comprising a mold, a heater positioned in the vicinity of said mold, a fixed electrical panel connected to said heater and fed by electrical power and a heat pipe provided for transferring the heat, applied by said heater, to the mold, connected to the mold from one end and connected to said heater from the other end such that there is heat transfer in between and a control unit for controlling the power provided from the fixed electrical panel to at least one heater.

### BRIEF DESCRIPTION OF THE INVENTION

The present invention relates to mold heating and cooling system which increases production speed for rotational molding technology, for eliminating the above mentioned disadvantages and for bringing new advantages to the related technical field.

The main object of the present invention is to provide a mold heating system which increases production speed in shaping the materials by means of mold.
Another object of the present invention is to provide a mold heating system which increases efficiency in shaping materials by means of mold.
Another object of the present invention is to provide a mold heating system which reduces cost in shaping the materials by means of the mold.
Another object of the present invention is to provide a mold heating system which increases power saving in shaping the materials by means of mold.

Another object of the present invention is to provide a mold heating system which reduces carbon footprint in rotational molding.

In order to realize all of the abovementioned objects and the objects which are to be deducted from the detailed description below, the present invention provides a mold heating system according to claim 1.

In another preferred embodiment of the invention, each of pluralities of heat pipes is connected to a different point of the mold from one end, and each of pluralities of heaters is connected to the heat pipe such that there is heat transfer in between. Thus, although each heat pipe heats the region whereon said heat pipe affects on the mold, each point in the mold can be heated separately up to the desired degree since there are pluralities of heat pipes.

In another preferred embodiment of the invention, the control unit determines which ones of said heaters are driven and the amount of applied power and/or driving duration. Thus, the wall thickness of the polymer based material which is to be shaped inside the mold can be adjusted.

In another preferred embodiment of the invention, at least one of said heaters is an electrical heater and said electrical heater is positioned in a manner directly contacting the corresponding heat pipe. Thus, the heat energy is directly transferred from the electrical heater to the heat pipe.

In another preferred embodiment of the invention, each heater contacts the corresponding heat pipe in a manner at least partially encircling said heat pipe.

In another preferred embodiment of the invention, the electrical heaters comprise two metal plates between which a placement opening is provided and one end of the heat pipe enters into said placement opening in a manner contacting the two metal plates. Thus, the heat transfer speed increases.

In another preferred embodiment of the invention, at least one of said heaters is a microwave heater, and said microwave heater is positioned to the corresponding heat pipe such that there is a microwave transmission interval in between.

In another preferred embodiment of the invention, said mold comprises pluralities of housings which define a thermal oil region wherein thermal oil can be applied and wherein one end of each heat pipe is inserted in a manner contacting the thermal oil. Thus, as the thermal oil is kept inside the housing, the flow of the thermal oil as a result of heat and/or the thermal oil loss is/are minimized, and the usage lifetime increases. The thermal oil accelerates / facilitates the transfer of the heat, existing in the heat pipe, to the mold.

In another preferred embodiment of the invention, each heat pipe extends outwardly from the mold such that one end of said heat pipe enters into the related housing. Thus, each heat pipe can be connected to a heater from one end.

In another preferred embodiment of the invention, the heat pipe diameter is at a value between 6 mm and 20 mm.

In another preferred embodiment of the invention, a communication interface is provided on the control unit, in order to provide tracing and/or programming of the control unit. Thus, speed of data transfer from the control unit to the fixed electrical panel increases.

In another preferred embodiment of the invention, said communication interface is a wireless communication interface.

In another preferred embodiment of the invention, the mold, the heaters, the heat pipes and the control unit are positioned on a carrier arm in a manner rotating together with said carrier arm.

In another preferred embodiment of the invention, a conducting brush is provided for conducting electricity from the fixed power source to the rotationally moving control unit.

In order to realize all of the abovementioned objects and the objects which are to be deducted from the detailed description below, the present invention provides a mold heating method according to claim 14.

In another preferred embodiment of the invention, each of the pluralities of heat pipes is connected to a different point of the mold from one end and each heat pipe is heated by means of a separate heater.

In another preferred embodiment of the invention, during the heating process, the heaters are driven such that power is applied for a specific duration and/or at a specific proportion of the power thanks to the electrical power applied from the power control unit within software prepared beforehand and which can be determined individually for each heater and/or heater group.

In another preferred embodiment of the invention, in order to provide temperature control on the mold, the communication between the fixed electrical panel and the control unit is provided by means of usage of the radio frequency communication system.

In another preferred embodiment of the invention, the temperature values on the mold are measured by using thermocouple connected onto the mold.

In another preferred embodiment of the invention, the temperature values taken from the thermocouples are transferred to the fixed electrical panel by means of usage of radio frequency, and the fixed electrical panel can be set to the temperature value required for the mold surface.

In another preferred embodiment of the invention, said heater is at least one electrical heater, and said electrical heater is in direct contact with the corresponding heat pipe.

In another preferred embodiment of the invention, said heaters are microwave heaters; and a heat transfer interval is provided between said microwave heaters and the corresponding heat pipe.

In another preferred embodiment of the invention, the heat applied by the heat pipes is spread by means of thermal oil wherein the related heat pipe is immersed from one end in at least one predetermined region of the mold. Thus, thanks to the thermal oil, the speed of transfer of the heat to the mold is additionally increased.

According to the invention, the mold, the heaters, the heat pipes and the control unit are rotated on a carrier arm in a manner rotating together with the carrier arm and thus such that the polymer raw material is plastered onto the inner walls of the mold.

### BRIEF DESCRIPTION OF THE FIGURES

In Figure 1, a representative view of the mold heating system is given.

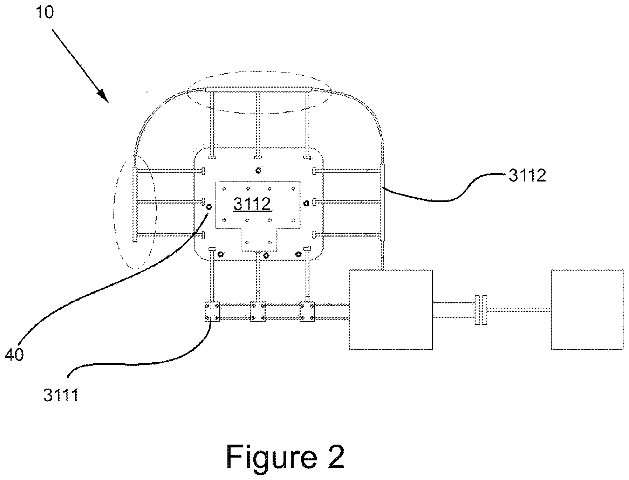

In Figure 2, another representative view of the mold heating system is given from another perspective.

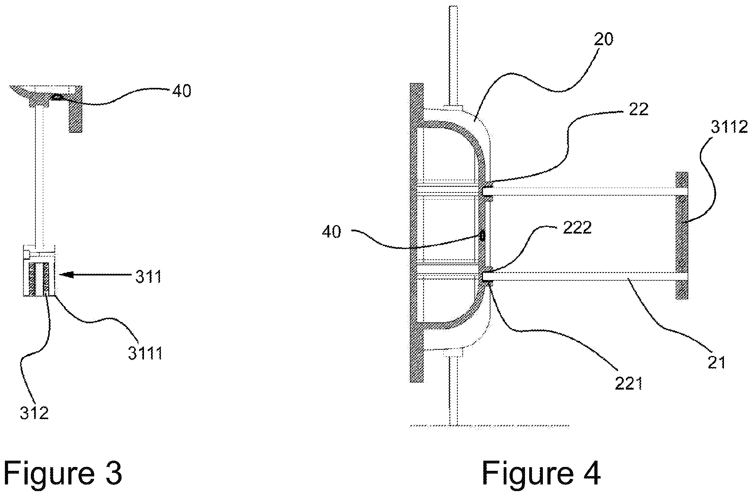

In Figure 3, a representative view of the embodiment where the resistances contact the heat pipe in the system functioning by means of electrical resistance is given.
In Figure 4, another representative view of the embodiment where the resistances contact the heat pipe in the system functioning by means of electrical resistance is given.

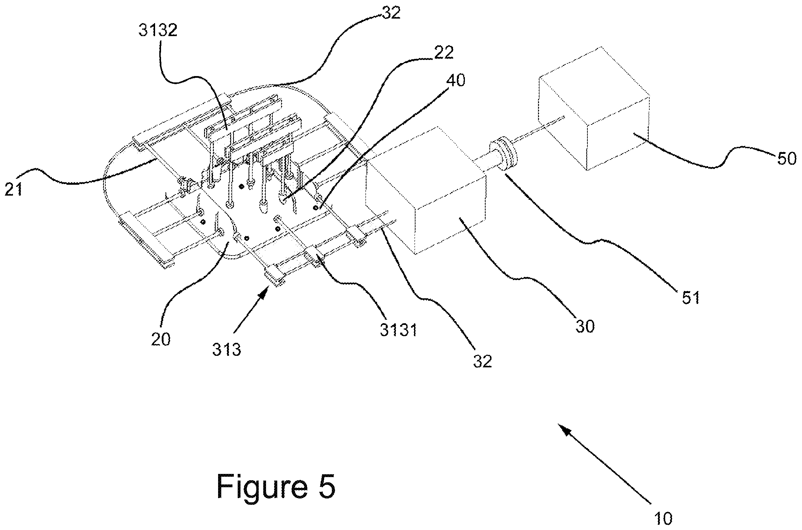

In Figure 5, a representative view of the system functioning by means of microwave is given.

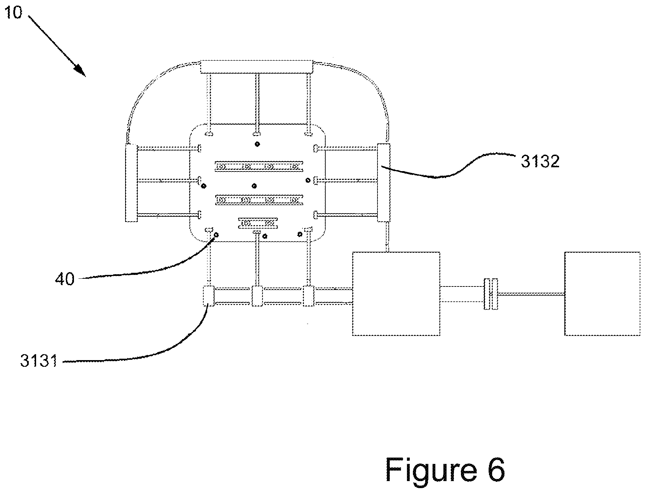

In Figure 6, another representative view of the system functioning by means of microwave is given.

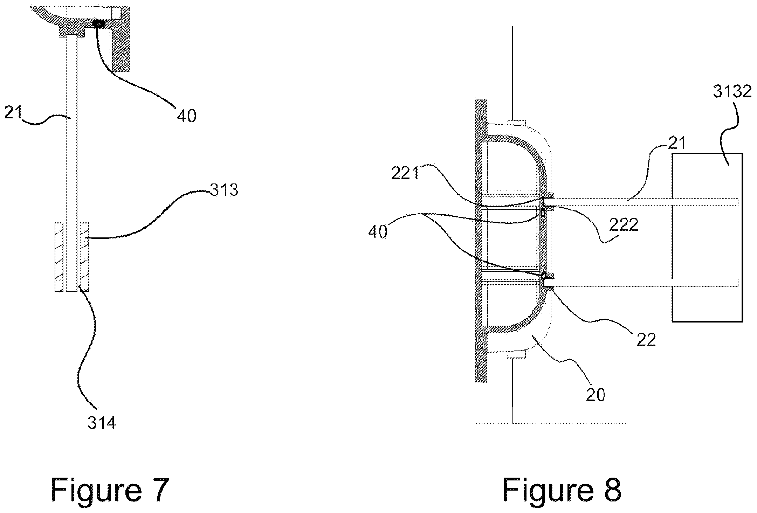

In Figure 7, a representative view of the embodiment where the microwave plates do not contact the heat pipe in the system which functions by means of microwave is given.
In Figure 8, another representative view of the embodiment where the microwave plates do not contact the heat pipe in the system which functions by means of microwave is given.

### REFERENCE NUMBERS

- 10: Mold heating system
- 20: Mold
21 Heat pipe
22 Housing
221 Thermal oil region
222 Thermal oil
- 30: Control unit
31 Heater
311 Electrical heater
3111 Single electrical heater
3112 Multiple electrical heater
312 Placement opening
313 Microwave heater
3131 Single microwave heater
3132 Multiple microwave heater
314 Heat transfer interval
32 Cable
- 40: Thermocouple
- 50: Fixed electrical panel
- 51: Conductive brush

### DETAILED DESCRIPTION OF THE INVENTION

In this detailed description, the mold heating system (10) used for shaping three-dimensional plastic material inside a mold (20) is explained with references to examples without forming any restrictive effect only in order to make the subject more understandable.

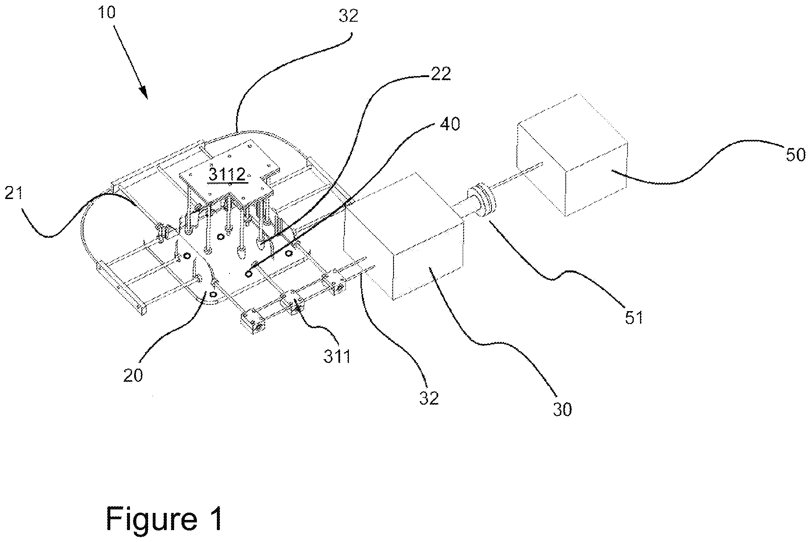

With reference to Figure 1, there is a mold (20) provided on a carrier arm (not illustrated in the figures). Said mold (20) comprises pluralities of housings (22) which define a thermal oil region (221) wherein thermal oil (222) can be placed and wherein one end of each heat pipe (21) enters in a manner contacting the thermal oil (222). Thanks to the thermal oil (222), the transfer speed of the heat on the mold (20) increases more. Said heat pipes (21) are manufactured by means of known technology, and preferably there are pluralities of heat pipes (21). The function of the heat pipe (21) is to transfer the heat, received from outside, to the mold (20) in a rapid manner without loss. There is at least one thermocouple (40) positioned on the mold (20). Said thermocouple (40) measures the amount of heat where it is positioned. There is a single thermocouple (40) for each multiple electrical heater (3112) and for each multiple microwave heater (3132). A thermocouple (40) is used for each single electrical heater (3111) and each single microwave heater (3131). Thanks to these single thermocouples (40), the region which is desired to be heated at a different degree can be heated at the desired degree depending on the geometric shape of the mold (20).

The heat pipe (21) leaves the latent heat of the vapor to the mold (20) as vaporization occurs as a result of heat applied therein and as it turns into liquid form. A special fluid is put therein which changes depending on the heat level used. The fluid, which is to be used, changes depending on the purpose of usage. The heat pipe (21) is vacuumed, it has a porous inner wall and it is frequently used in heating / cooling technologies. It is heated by means of energy from outside. The heat pipe (21) is made of a material which provides thermal conduction, and it is preferably made of copper material.

The heat pipes (21) are positioned at a specific angle in a protruded manner on the mold (20). It is preferably positioned at an orthogonal angle. It is placed on the mold (20) at number and frequency calculated to provide the required thermal conduction to the mold (20). Thus, the heat provided to the end of the heat pipe (21) by means of a heater (31) reaches the mold (20) in a rapid manner without loss. By means of this, the polymer based material provided inside the mold (20) is molten. In order to transfer the heat, applied by the heater (31), to the mold (20), the heat pipe (21) is connected onto the mold (20) from one end and it is connected to said heater (31) from the other end such that there is thermal conduction in between.

There is a control unit (30) placed in the vicinity of the mold (20). In the preferred embodiment, the control unit (30) is positioned on the carrier arm or on a robot arm. The control unit (30) is connected to a fixed electrical panel (50). The required energy is transferred to the control unit (30) through the fixed electrical panel (50) by means of at least one conductive brush (51). The conductive brush (51) is connected to the fixed electrical panel (50) from one end and it is connected to the control unit (30) from the other side, and it transfers the power, received from the fixed electrical panel (50), to the control unit (30). In the preferred application, an electrical power at an amount of 220 V or 380 V is transmitted.

The heat pipe (21) is connected to the mold (20) from one end, and it is connected to a heater (31) from the other end. There is a cable (32) extending between the control unit (30) and said each heater (31). Each heater (31) corresponds to a heat pipe (21).

The power transmitted to the heat pipe (21) can be transformed into heat by means of three methods:
a) By means of connecting electrical resistance plate heaters (31) to the heat pipes (21)
b) By means of positioning the microwave heat plate heaters (31) in the vicinity of the heat pipes (21) without contacting thereto
c) By means of connecting the conductive element, coated with a highly conductive material like gold, silver, to the heat pipes (21)

As the heater (31), an electrical heater (311), comprising electrical resistance plate, can be used; a microwave heater (313) comprising at least one microwave plate can be used; or a conductive material, coated with a highly conductive material like gold, silver, can be used. At least one single electrical heater (3111) and/or at least one multiple electrical heater (3112) can be used as the electrical heater (311) in accordance with the geometric shape and the property of the product to be produced. On the electrical heater (311) which is in plate form, there is a placement opening (312) embodied in a manner at least partially encircling a heat pipe (21). The electrical heaters (311) comprise two metal plates having placement opening (312) in between, and one end of the heat pipe (21) is placed to said placement opening (312) in a manner contacting both of the two metal plates. In the preferred application, the placement opening (312) is embodied in a manner completely encircling the heat pipe (21) and in a manner providing thermal conduction in the most efficient manner.

There is a heat transfer interval (314) provided between the heat pipe (21) and the microwave heater (313) which is in plate form. Preferably two microwave heater (313) plates are used. The microwave heaters (313) are positioned such that there is a heat transfer interval (314) between the corresponding heat pipe (21) and said microwave heaters (313). Depending on the geometric shape and the property of the product to be produced, at least one single microwave heater (3131) and/or at least one multiple microwave heater (3132) can be used.

The electrical current applied to the heaters (31) provided at the end of the heat pipe (21) is controlled by the control unit (30). At the same time, said control unit (30) controls and determines the temperature value to be transferred to the heat pipe (21). The control unit (30) comprises all of the required electronic units / microprocessor and PLC unit which measure the temperature of the mold (20) and which control in accordance with the rotational molding technology. The control unit (30) can be monitored and controlled through the fixed electrical panel (50) in a remotely controlled manner. The communication between the fixed electrical panel (50) and the control unit (30) is provided by means of a wireless communication interface. In the preferred application, it is controlled by means of radio frequency control.

Since the control unit (30) is positioned on the carrier arm, the control unit (30) rotates together with the mold (20). Meanwhile, the heat applied to the heat pipes (21), which carry the heat to the mold (20), by means of heaters (31) is going to be transferred to the desired level such that every point of the mold (20) surfaces is separate (at different temperature values) by means of said control unit (30). Additionally, the control unit (30) can increase and decrease the amount of heat to be applied to the heaters (31) during heating. Moreover, the control unit (30) can realize heating by providing power transmission to the heaters (31) for a determined duration and/or at specific periods.

In the preferred embodiment of the present invention, electrical resistance plates are used as heater (31). Polymer based material, which is to be shaped, is placed into the mold (20) positioned on the carrier arm. At the continuation, the mold (20), where the heat pipes (21) are positioned, is closed. Heaters (31) are connected to the other end of the heat pipes (21) which is placed to the housings (22) from one end. Afterwards, the carrier arm (or the robot arm) begins rotating. Electrical power, which is at a level which can be controlled individually, is applied to the heater (31) from the control unit (30) simultaneously, and the heater (31) is activated, and the heat pipes (21) are heated. The heated heat pipes (21) transfer the heat thereof to the mold (20) in a rapid manner. Thus, the spreading of the heat towards outside / wasting of the heat is prevented. The polymer material, provided in the heated mold (20), is molten and the polymer material takes the form of the mold (20) by being plastered onto the inner walls of the mold (20) thanks to the rotational movement of the carrier arm.

In the alternative embodiment of the present invention, microwave plates (313) are used as the heater (31). The microwave plates (313) are made of a material which can emit high frequency. The applied electrical power is transformed into thermal energy by the microwave plates (313). The heaters (31) with microwave plate (313) are positioned at the required distance without contacting the heat pipe (21). As in the preferred embodiment, thermal oil (222) is applied into the housings (22). The heat pipes (21) are heated by absorbing the temperature in the medium heated by the heaters (31) provided in the microwave plate (313) structure. The heat pipes (21) transfer the heat, absorbed in the body thereof, to the mold (20) in a rapid manner. The polymer material, provided in the heated mold (20), is molten, and thanks to the rotational movement of the carrier arm, the polymer material is plastered onto the inner walls of the mold (20), and it takes the form of the mold (20). Thanks to the mold (20) used, the product, which is desired to be obtained, takes its final form.

After the polymer material provided in the mold (20) is plastered onto the inner wall of the mold (20) by means of heat, the mold (20) is cooled down before it is removed from the mold (20) in order to fix the shape of the polymer material. Thanks to the structure of the heat pipes (21), the heat pipes (21) function in the inverse manner during the cooling process, and the heat pipes (21) carry the heat of the mold (20) outwardly, and they accelerate the cooling of the mold (20). The electrical power applied to the heaters (31) is interrupted as a result of the signal given by the control unit (30), and the heaters (31) are cooled down and thus, the heat pipes (21) also cool down. The heat transfer onto the mold (20) surface by the heat pipes (21) is ended, and the mold (20) is left for cooling down.

After the heating/melting process is ended and after the plastic, provided in the mold, takes its product form, the electrical power applied to the heat pipes (21) is completely interrupted, and the whole system is left for cooling down. For providing cooling, cool air is blown to the ends of the heat pipes (21), existing on the mold (20), provided on the heater (31) side, in addition to the cooling of the heaters (31) as a result of environmental conditions. In another alternative embodiment, liquid is also sprayed together with cool air. Optionally, the cooling process can also be realized by spraying only liquid to the end of the heat pipe (21) provided on the heater (31) side. The cooled down heat pipes (21) function in the inverse manner, and they carry the heat, provided in the mold which is hotter, to the environment which is colder. Thus, the mold (20) is cooled in a rapid manner.

The data like the thermal levels of the heaters, the rotation speed of the mold (20) in each axis, the heating duration, the cooling duration, etc. are controlled by means of computer / PLC / radio frequency transmission system provided on the fixed electrical panel (50). At the same time, thermal data is also transferred from the thermocouples (40) to the fixed electrical panel (50). Thus, the temperature changes on the mold (20) can be monitored through the fixed electrical panel (50). Moreover, thanks to the computer / PLC / radio frequency transmission system provided on the fixed electrical panel (50), the assessment, calculation and controls of all of the desired values can be realized.

The heat pipes (21) can be placed onto the mold (20) by means of one-piece, snap fit, screwing, etc. in a manner increasing the contact and in a manner not preventing thermal conduction. The heat pipes (21) used can be at various thicknesses depending on the usage purpose. The diameters of the heat pipes (21) which are commercially available can be between 6 mm - 150 mm. In the preferred application, the diameter of the heat pipes (21) is between 6 mm - 20 mm. Again in the preferred application, the mold (20), the heaters (31), the heat pipes (21) and the control unit (30) are positioned on a carrier arm in a manner rotating together with the carrier arm.

Some of the advantages obtained by using the abovementioned system are as follows;
- Since there is no need to heat the furnace, power saving is obtained since only the mold (20) is heated.
- Power efficiency of the rotational molding system using natural gas can be increased from 10 % up to 80 %.
- The carbon footprint is reduced and environmental pollution is reduced.
- Since heat pipes (21), which function as the heat transfer bridge, are used, the mold (20) is rapidly heated and rapidly cooled when required.
- Production speed is increased.
- Efficiency is increased since the environment is not heated.
- Production cost is reduced.
- The molds (20), prepared for conventional rotational molding systems, can be transformed into forms which can be heated by means of heat pipes (21) by applying small additions and alterations, and thus, each company using rotational molding technology can transform its conventional molds into the mold (20) system described above.

The abovementioned embodiment becomes more efficient in case it is preferred for the products having a specific volume. Since the size of the mold (20), used in production of a great volume product, increases, the number of heat pipes (21) and heaters (31), used for this mold (20), also increases. As the product wall is thickened, the plastic material, plastered onto the mold (20) wall, will form a thermal isolation barrier, and the heat transfer efficiency will decrease. In this case, since the costs increase, the usage of the embodiments, described in the present invention, for the products having wall thickness of preferably lower than 10 kg and/or maximum 8 mm is more efficient.

The invention is defined by the appended claims and cannot be restricted to the illustrative disclosures given above, under the detailed description. It is because a person skilled in the relevant art can obviously produce similar embodiments under the light of the foregoing disclosures, without departing from the main principles of the present invention.

## Claims

1. A mold heating system (10) comprising a mold (20) used in shaping polymer based material by means of heat, a heater (31) positioned in the vicinity of said mold (20), a fixed electrical panel (50) connected to said heater (31) and fed by electrical power, **characterized by** comprising a heat pipe (21) provided for transferring the heat, applied by said heater (31), to the mold (20) and connected to the mold (20) from one end and connected to said heater (31) from the other end such that there is heat transfer in between, and a control unit (30) for controlling the power provided from the fixed electrical panel (50) to at least one heater (31); and the mold (20), the heaters (31), the heat pipes (21) and the control unit (30) are positioned on a carrier arm in a manner rotating together with said carrier arm.

2. A mold heating system (10) according to claim 1, wherein each of pluralities of heat pipes (21) is connected to a different point of the mold (20) from one end, and each of pluralities of heaters (31) is connected to the heat pipe (31) such that there is heat transfer in between.

3. A mold heating system (10) according to claim 2, wherein the control unit (30) determines which ones of said heaters (31) are driven and the amount of applied power and/or driving duration.

4. A mold heating system (10) according to claim 2, wherein at least one of said heaters (31) is an electrical heater (311) and said electrical heater (311) is positioned in a manner directly contacting the corresponding heat pipe (21).

5. A mold heating system (10) according to claim 3, wherein each heater (31) contacts the corresponding heat pipe (21) in a manner at least partially encircling said heat pipe (21).

6. A mold heating system (10) according to claim 4, wherein the electrical heaters (311) comprise two metal plates between which a placement opening (312) is provided and one end of the heat pipe (21) enters into said placement opening (312) in a manner contacting the two metal plates.

7. A mold heating system (10) according to claim 2, wherein at least one of said heaters (31) is a microwave heater (313), and said microwave heater (313) is positioned to the corresponding heat pipe (21) such that there is a heat transfer interval (314) in between.

8. A mold heating system (10) according to claim 1, wherein said mold (20) comprises pluralities of housings (22) which define a thermal oil region (221) wherein thermal oil (222) is placed and wherein one end of each heat pipe (21) is inserted in a manner contacting the thermal oil (222).

9. A mold heating system (10) according to claim 8, wherein each heat pipe (21) extends outwardly from the mold (20) such that one end of said heat pipe (21) enters into the related housing (22).

10. A mold heating system (10) according to claim 1, wherein the heat pipe (21) diameter is at a value between 6 mm and 20 mm.

11. A mold heating system (10) according to claim 1, wherein a communication interface is provided on the control unit (30), in order to provide tracing and/or programming of the control unit (30).

12. A mold heating system (10) according to claim 11, wherein said communication interface is a wireless communication interface,

13. A mold heating system (10) according to claim 13, wherein a conducting brush (51) is provided for conducting electricity from the fixed electrical panel (50) to the rotationally moving control unit (30).

14. A mold heating method where a heater (31) is provided in the vicinity of a mold (20) used in shaping polymer based material by means of heat and where said heater (20) is driven by means of a fixed electrical panel (50) fed by electrical power, wherein the following steps are included:
a) a heat pipe (21) is connected onto the mold (20) from one end and it is connected to said heater (31) from the other end such that there is heat transfer in between
b) power is applied to the heater (31) and thus the heat, generated by the heater (31), is transferred to the mold (20) through said heat pipe (21)
c) the power, provided to the heater (31), and thus the heat, transferred to the mold (20), are controlled during the heating process and the mold (20), the heaters (31), the heat pipes (21) and the control unit (30) are rotated on a carrier arm in a manner rotating together with the carrier arm and thus such that the polymer raw material is plastered onto the inner walls of the mold (20).

15. A mold heating method according to claim 14, wherein each of the pluralities of heat pipes (21) is connected to a different point of the mold (20) from one end and each heat pipe (21) is heated by means of a separate heater (31).

16. A mold heating method according to claim 15, wherein during the heating process, the heaters (31) are driven such that power is applied for a specific duration and/or at a specific proportion of the power thanks to the electrical power transmitted from the fixed electrical panel (50) to the control unit by means of brushes (51) within a predetermined program/software which can be changed in accordance with the product / mold.

17. A mold heating method according to claim 16, wherein in order to provide temperature control on the mold (20), the communication between the fixed electrical panel (50) and the control unit (30) is provided by means of usage of the radio frequency communication system.

18. A mold heating method according to claim 14, wherein the temperature values on the mold (20) are measured by using thermocouple (40) connected onto the mold (20).

19. A mold heating method according to claim 18, wherein the temperature values taken from the thermocouples (40) are transferred to the fixed electrical panel (50) by means of usage of radio frequency, and the fixed electrical panel (50) can be set to the temperature value required for the mold (20) surface,

20. A mold heating method according to claim 15, wherein said heater (31) is at least one electrical heater (311), and said electrical heater (311) is in direct contact with the corresponding heat pipe (21).

21. A mold heating method according to claim 15, wherein said heaters (31) are microwave heaters (313), and a heat transfer interval (314) is provided between said microwave heaters (313) and the corresponding heat pipe (21).

22. A mold heating method according to claim 15, wherein the heat applied by the heat pipes is spread by means of thermal oil (222) wherein the related heat pipe (21) is immersed from one end in at least one predetermined region of the mold (20).

## Patentansprüche

1. Formheizsystem (10) umfassend eine Form (20), die zum Formen von Formmassen auf Polymerbasis mittels Wärme verwendet wird, eine Heizvorrichtung (31), die in der Nähe der Form (20) angeordnet ist, eine fest angebrachte Schalttafel (50), die mit der Heizvorrichtung (31) verbunden ist und mit elektrischem Strom gespeist wird, **gekennzeichnet durch** ein Heizrohr (21), das zur Übertragung der von der Heizvorrichtung (31) auf die Form (20) aufgebrachten Wärme dient und mit seinem einen Ende mit der Form (20) und mit seinem anderen Ende mit der Heizvorrichtung (31) verbunden ist, so dass dazwischen eine Wärmeübertragung stattfindet, sowie eine Steuereinheit (30) zum Steuern der Leistung, die von der fest angebrachten Schalttafel (50) an mindestens eine Heizvorrichtung (31) gespeist wird, wobei die Form (20), die Heizvorrichtungen (31), die Heizrohre (21) und die Steuereinheit (30) auf einem Tragarm so stationiert sind, dass sie sich zusammen mit dem Tragarm drehen.

2. Formheizsystem (10) nach Anspruch 1, wobei jeder der mehreren Heizrohre (21) mit ihrem einen Ende mit einer anderen Stelle der Form (20) verbunden sind und wobei jede der mehreren Heizvorrichtungen (31) mit einem Heizrohr (21) verbunden sind, so dass dazwischen eine Wärmeübertragung stattfindet.

3. Formheizsystem (10) nach Anspruch 2, wobei die Steuereinheit (30) bestimmt, welche der Heizvorrichtungen (31) jeweils angetrieben und wie viel Strom gespeist und/oder wie lange die Antriebszeit dauern soll.

4. Formheizsystem (10) nach Anspruch 2, wobei mindestens eine der Heizvorrichtungen (31) eine elektrische Heizvorrichtung (311) ist und die elektrische Heizvorrichtung (311) so positioniert ist, dass sie in direktem Kontakt mit dem entsprechenden Heizrohr (21) steht.

5. Formheizsystem (10) nach Anspruch 3, wobei der Kontakt zwischen jeder einzelnen Heizvorrichtung (31) dem entsprechenden Heizrohr (21) so ausgeführt ist, dass das Heizrohr (21) zumindest teilweise umgeben wird.

6. Formheizsystem (10) nach Anspruch 4, wobei die elektrischen Heizvorrichtungen (311) zwei Metallplatten umfassen, zwischen denen eine Einbauöffnung (312) vorgesehen ist und wobei ein Ende des Heizrohrs (21) in die Einbauöffnung (312) so eindringt, dass zu beiden Metallplatten Kontakt hergestellt wird.

7. Formheizsystem (10) nach Anspruch 2, wobei mindestens eine der Heizvorrichtungen (31) eine Mikrowellenheizvorrichtung (313) ist und die Mikrowellenheizvorrichtung (313) an dem jeweiligen Heizrohr (21) so positioniert ist, dass dazwischen ein Zwischenraum (314) zur Wärmeübertragung hergestellt wird.

8. Formheizsystem (10) nach Anspruch 1, wobei die Form (20) mehrere Gehäusen (22) umfasst, die einen Thermoölbereich (221) abgrenzen, der mit Thermoöl (222) befüllt ist und in den jeweils ein Ende jedes Heizrohrs (21) so eindringt, dass jedes Ende das Thermoöl (222) berührt.

9. Formheizsystem (10) nach Anspruch 8, wobei sich jedes Heizrohr (21) von der Form (20) so nach außen hin erstreckt, dass jeweils ein Ende des Heizrohrs (21) in das zugehörige Gehäuse (22) eindringt.

10. Formheizsystem (10) nach Anspruch 1, wobei der Durchmesser jedes Heizrohrs (21) im Bereich zwischen 6 mm und 20 mm liegt.

11. Formheizsystem (10) nach Anspruch 1, wobei an der Steuereinheit (30) eine Kommunikationsschnittstelle vorgesehen ist, anhand welcher die Steuereinheit (30) verfolgt und/oder programmiert werden kann.

12. Formheizsystem (10) nach Anspruch 11, wobei die Kommunikationsschnittstelle eine drahtlose Kommunikationsschnittstelle ist.

13. Formheizsystem (10) nach Anspruch 13, wobei eine elektrisch leitfähige Bürste (51) vorgesehen ist, die Elektrizität von der fest angebrachten Schalttafel (50) zur sich drehenden Steuereinheit (30) leitet.

14. Formheizverfahren bei dem eine Heizvorrichtung (31) in der Nähe einer zum Formen von Formmassen auf Polymerbasis mittels Wärme verwendeten Form (20) vorgesehen ist und bei dem eine fest angebrachte Schalttafel (50) mit der Heizvorrichtung (20) verbunden ist und mit elektrischem Strom gespeist wird, umfassend die folgenden Verfahrensschritte:
a) ein Heizrohr (21) wird mit seinem einen Ende mit der Form (20) und mit seinem anderen Ende mit der Heizvorrichtung (31) verbunden, so dass dazwischen eine Wärmeübertragung stattfindet,
b) die Heizvorrichtung (31) wird mit Strom versorgt und somit wird die durch die Heizvorrichtung (31) erzeugte Wärme über das Heizrohr (21) auf die Form (20) übertragen
c) der Strom, mit dem die Heizvorrichtung (31) versorgt wird, und somit auch die auf die Form (20) übertragene Wärme werden während des Heizvorgangs gezielt gesteuert, wobei die Form (20), die Heizvorrichtungen (31), die Heizrohre (21) und die Steuereinheit (30), die auf einem Tragarm angeordnet sind, zusammen mit dem Tragarm so gedreht werden, dass das Polymerrohmaterial die Innenwände der Form (20) beschichtet.

15. Formheizverfahren nach Anspruch 14, wobei jeder der mehreren Heizrohre (21) mit ihrem einen Ende mit einer anderen Stelle der Form (20) verbunden sind und wobei jedes Heizrohr (21) mittels einer separaten Heizvorrichtung (31) beheizt wird.

16. Formheizverfahren nach Anspruch 15, wobei die Heizvorrichtungen (31) während des Heizvorgangs so angetrieben werden, dass die Speisung des mittels Bürsten (51) von der fest angebrachten Schalttafel (50) an die Steuereinheit übertragenen Stroms für eine bestimmte Dauer und / oder einen bestimmten Stromanteil erfolgt, was mittels eines vorbestimmten Programms / einer Software je nach Produkt / Form gezielt geregelt werden kann.

17. Formheizverfahren nach Anspruch 16, wobei zur Temperaturregelung an der Form (20) die Kommunikation zwischen der fest angebrachten Schalttafel (50) und der Steuereinheit (30) durch die Verwendung des Hochfrequenzkommunikationssystems bereitgestellt wird.

18. Formheizverfahren nach Anspruch 14, wobei die Temperaturwerte an der Form (20) unter Verwendung eines an die Form (20) angekoppelten Thermoelements (40) gemessen werden.

19. Formheizverfahren nach Anspruch 18, wobei die von den Thermoelementen (40) entnommenen Temperaturwerte mittels Hochfrequenz auf die fest angebrachte Schalttafel (50) übertragen werden und die fest angebrachte Schalttafel (50) so eingestellt werden kann, dass auf der Oberfläche der Form (20) der erforderliche Temperaturwert erzeugt wird.

20. Formheizverfahren nach Anspruch 15, wobei die Heizvorrichtung (31) mindestens eine elektrische Heizvorrichtung (311) ist und die elektrische Heizvorrichtung (311) in direktem Kontakt mit dem entsprechenden Heizrohr (21) steht.

21. Formheizverfahren nach Anspruch 15, wobei die Heizvorrichtungen (31) als Mikrowellenheizvorrichtungen (313) ausgestaltet sind und zwischen den Mikrowellenheizvorrichtungen (313) und dem entsprechenden Heizrohr (21) jeweils ein Zwischenraum (314) zur Wärmeübertragung vorgesehen ist.

22. Formheizverfahren nach Anspruch 15, wobei die von den Heizrohren aufgebrachte Wärme mittels Thermoöl (222) verteilt wird, wobei das jeweilige Heizrohr (21) mit seinem einen Ende in mindestens einen vorbestimmten Bereich der Form (20) eingesteckt wird.

## Revendications

1. Système de chauffage de moule (10) comprenant un moule (20) utilisé pour façonner un matériau à base de polymère au moyen de la chaleur, un radiateur (31) positionné à proximité dudit moule (20), un panneau électrique fixe (50) connecté vers ledit radiateur (31) et alimenté en énergie électrique, **caractérisé en ce qu'**il comprend un caloduc (21) prévu pour transférer la chaleur, appliqué par ledit radiateur (31), au moule (20) et connecté au moule (20) à partir de une extrémité et connectée audit radiateur (31) à partir de l'autre extrémité de manière à ce qu'il y ait un transfert de chaleur entre les deux, et une unité de commande (30) pour contrôler la puissance fournie par le panneau électrique fixe (50) à au moins un radiateur (31) ; et le moule (20), les radiateurs (31), les caloducs (21) et l'unité de commande (30) sont positionnés sur un bras porteur d'une manière tournant avec ledit bras porteur.

2. Système de chauffage de moule (10) selon la revendication 1, dans lequel chacune des pluralités de caloducs (21) est connectée à un point différent du moule (20) à partir d'une extrémité, et chacune des pluralités de radiateurs (31) est connecté au caloduc (31) de sorte qu'il y ait un transfert de chaleur entre eux.

3. Système de chauffage de moule (10) selon la revendication 2, dans lequel l'unité de commande (30) détermine lesquels desdits radiateurs (31) sont entraînés et la quantité de puissance appliquée et / ou la durée d'entraînement.

4. Système de chauffage de moule (10) selon la revendication 2, dans lequel au moins l'un desdits radiateurs (31) est un élément chauffant électrique (311) et ledit élément chauffant électrique (311) est positionné d'une manière en contact direct avec le caloduc correspondant (21).

5. Système de chauffage de moule (10) selon la revendication 3, dans lequel chaque radiateur (31) entre en contact avec le caloduc correspondant (21) d'une manière entourant au moins partiellement ledit caloduc (21).

6. Système de chauffage de moule (10) selon la revendication 4, dans lequel les éléments chauffants électriques (311) comprennent deux plaques métalliques entre lesquelles une ouverture de placement (312) est prévue et une extrémité du caloduc (21) entre dans ladite ouverture de placement. (312) en contact avec les deux plaques métalliques.

7. Système de chauffage de moule (10) selon la revendication 2, dans lequel au moins l'un desdits radiateurs (31) est un élément chauffant à micro-ondes (313), et ledit élément chauffant à micro-ondes (313) est positionné sur le caloduc correspondant (21) tel qu'il y a un intervalle de transfert de chaleur (314) entre eux.

8. Système de chauffage de moule (10) selon la revendication 1, dans lequel ledit moule (20) comprend plusieurs logements (22) qui définissent une région d'huile thermique (221) dans laquelle de l'huile thermique (222) est placée et dans laquelle une extrémité de chaque caloduc (21) est inséré d'une manière en contact avec l'huile thermique (222).

9. Système de chauffage de moule (10) selon la revendication 8, dans lequel chaque caloduc (21) s'étend vers l'extérieur du moule (20) de telle sorte qu'une extrémité dudit caloduc (21) pénètre dans le logement associé (22).

10. Système de chauffage de moule (10) selon la revendication 1, dans lequel le diamètre du caloduc (21) est à une valeur comprise entre 6 mm et 20 mm.

11. Système de chauffage de moule (10) selon la revendication 1, dans lequel une interface de communication est prévue sur l'unité de commande (30), afin d'assurer le traçage et / ou la programmation de l'unité de commande (30).

12. Système de chauffage de moule (10) selon la revendication 11, dans lequel ladite interface de communication est une interface de communication sans fil.

13. Système de chauffage de moule (10) selon la revendication 13, dans lequel une brosse conductrice (51) est prévue pour conduire l'électricité depuis le panneau électrique fixe (50) vers l'unité de commande (30) en rotation.

14. Méthode de chauffage de moule où un radiateur (31) est prévu à proximité d'un moule (20) utilisé pour façonner un matériau à base de polymère au moyen de la chaleur et où ledit radiateur (31) est entraîné au moyen d'un panneau électrique fixe (50) alimenté en énergie électrique, dans lequel les étapes suivantes sont incluses:
a) un caloduc (21) est connecté sur le moule (20) à partir d'une extrémité et il est connecté audit radiateur (31) à partir de l'autre extrémité de sorte qu'il y ait un transfert de chaleur entre les deux
b) de l'énergie est appliquée au radiateur (31) et ainsi la chaleur, générée par le radiateur (31), est transférée au moule (20) à travers ledit caloduc (21)
c) l'énergie fournie au radiateur (31), et donc la chaleur, transférée au moule (20), est contrôlée pendant le processus de chauffage et le moule (20), les radiateurs (31), les caloducs (21) et l'unité de commande (30) tournent sur un bras porteur d'une manière tournant avec le bras porteur et ainsi de telle sorte que la matière première polymère est appliquée sur les parois internes du moule (20).

15. Méthode de chauffage de moule selon la revendication 14, dans lequel chacune des pluralités de caloducs (21) est connectée à un point différent du moule (20) à partir d'une extrémité et chaque caloduc (21) est chauffé au moyen d'un radiateur séparé (31).

16. Méthode de chauffage de moule selon la revendication 15, dans lequel pendant le processus de chauffage, les radiateurs (31) sont entraînés de telle sorte que la puissance électrique est appliquée pendant une durée spécifique et / ou à une proportion spécifique de la puissance grâce à la puissance électrique transmise par le panneau électrique fixe (50) à l'unité de commande au moyen de brosses (51) dans un programme / logiciel prédéterminé qui peut être changé en fonction du produit / moule.

17. Méthode de chauffage de moule selon la revendication 16, dans lequel afin de fournir une commande de température sur le moule (20), la communication entre le panneau électrique fixe (50) et l'unité de commande (30) est assurée au moyen de l'utilisation du système de communication radiofréquence.

18. Méthode de chauffage de moule selon la revendication 14, dans lequel les valeurs de température sur le moule (20) sont mesurées en utilisant un thermocouple (40) connecté sur le moule (20).

19. Méthode de chauffage de moule selon la revendication 18, dans lequel les valeurs de température prises des thermocouples (40) sont transférées au panneau électrique fixe (50) au moyen de l'utilisation de radiofréquences, et le panneau électrique fixe (50) peut être réglé sur la valeur de température requise pour la surface du moule (20).

20. Méthode de chauffage de moule selon la revendication 15, dans lequel ledit radiateur (31) est au moins un élément chauffant électrique (311), et ledit élément chauffant électrique (311) est en contact direct avec le caloduc correspondant (21).

21. Méthode de chauffage de moule selon la revendication 15, dans lequel lesdits radiateurs (31) sont des éléments chauffants à micro-ondes (313), et un intervalle de transfert de chaleur (314) est prévu entre lesdits éléments chauffants à micro-ondes (313) et le caloduc correspondant (21).

22. Méthode de chauffage de moule selon la revendication 15, dans lequel la chaleur appliquée par les caloducs est répartie au moyen d'huile thermique (222) dans laquelle le caloduc associé (21) est immergé d'une extrémité dans au moins une région prédéterminée du moule (20).
